(19) Europäisches Patentamt

European Patent Office

Office européen des brevets

(11) **EP 1 056 040 A1**

(12) **EUROPEAN PATENT APPLICATION**

(43) Date of publication:
**29.11.2000 Bulletin 2000/48**

(51) Int. Cl.$^7$: **G06K 19/07**, G06K 19/077

(21) Application number: **00201875.2**

(22) Date of filing: **25.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.05.1999 NL 1012135**

(71) Applicant:
**N.V. Nederlandsche Apparatenfabriek NEDAP
7141 DC  Groenlo (NL)**

(72) Inventor:
**Hogen Esch, Johannes Harm Lukas
7122 ZN  Aalten (NL)**

(74) Representative:
**Prins, Adrianus Willem et al
Vereenigde,
Nieuwe Parklaan 97
2587 BN  Den Haag (NL)**

(54) **Identification label with impedance converter**

(57)    A contactless inductive identification label (1) with impedance converter (14), wherein the electronic circuit for generating the identification information (16) is designed using polymer semiconductor electronics and wherein the impedance conversion is taken care of by a silicon chip to obtain a lowest possible impedance of the resonant circuit and to obtain the lowest possible losses in the energy supply circuit. This label (1) can further be equipped with a deactivation possibility (24,26) for the purpose of antitheft systems, whereby the switch (26), which adds an extra capacitor (24) to the resonant circuit, is located on the silicon chip.

Figuur 1

**Description**

This invention relates to a contactless inductive identification label which responsively transmits identification information when the identification label is introduced into an electromagnetic interrogation field, comprising an electric circuit comprising a resonant circuit and a logic circuit connected to the resonant circuit, the logic circuit being adapted for generating the identification information, and the resonant circuit comprising a coil, the resonant circuit being adapted to resonate when the identification label is introduced into the interrogation field, and the logic circuit being adapted to feed the identification information to the resonant circuit for modulating the resonant circuit with the identification information.

Such a label is known per se. In the known label, the electric circuit, with the exception of the resonant circuit, is often entirely designed as a silicon chip which is provided on a carrier of the label. The resonant circuit mostly comprises a coil of metal and a capacity, which are likewise provided on the carrier. However, the capacity can also be part of the silicon chip.

For the application of such electronic contactless inductive identification labels as substitute for bar codes in the logistic route from manufacturer to customer, the cost price of such a label is a critical knock-out criterion. The cost price of an inductive identification label, designed as an integrated circuit in the known silicon chip technique, is determined in particular by the cost price of the coil, the cost price of the integrated circuit and the cost price of assembly, that is, the connections between the coil and the chip. The cost price of the integrated circuit in the form of a chip, which translates into the surface area of this chip, is an important factor here.

The present invention is based on the insight that recent developments in the field of conductive polymers and the related semiconductor properties make it possible to realize identification labels based on this technology, in which, however, the higher impedance of the conductive polymers used and the lower switching frequencies yield a limitation of the distances that can be contactlessly bridged. The major advantage of the use of polymer electronics, however, is the low cost price of the circuit that can be realized with it, compared with a circuit designed in silicon technology.

Accordingly, the invention is characterized in that the electric circuit comprises a first electric circuit which is designed in silicon semiconductor electronics and a second electric circuit which is designed in polymer semiconductor electronics, the coil and the second electric circuit being connected with each other via the first electric circuit, so that the first electric circuit functions as an impedance converter between the resonant circuit and the second electric circuit.

The present invention contemplates realizing a contactless inductive identification label having a largest possible contactless reading range and minimal cost price, by using a silicon chip of a smallest possible dimension as an impedance converter in connection with a polymer semiconductor circuit which can provide, for instance, for the drive of an amplitude modulator for data transfer. To bridge a largest possible distance, the quality of the resonant circuit

$$Q = \frac{1}{R}\sqrt{LC}$$

and the effective volume (magnetic dipole moment/field strength) thereof should preferably be as high as possible. This means that all components that are part of this resonant circuit, as well as the components that determine the losses in the supply of energy to the rest of the circuit, should make a smallest possible contribution to the impedance of this resonant circuit and to the losses of the energy supply circuit.

If the label is equipped with a deactivation possibility for the purpose of antitheft systems, as described in applicant's European patent application no. 97201455.9, this also involves the Field Effect Transistor (FET) switch, which adds an additional capacity to the resonant circuit, to thereby detune the resonant circuit outside the receiving range of the receiver. The invention will presently be further elucidated with reference to the drawing.

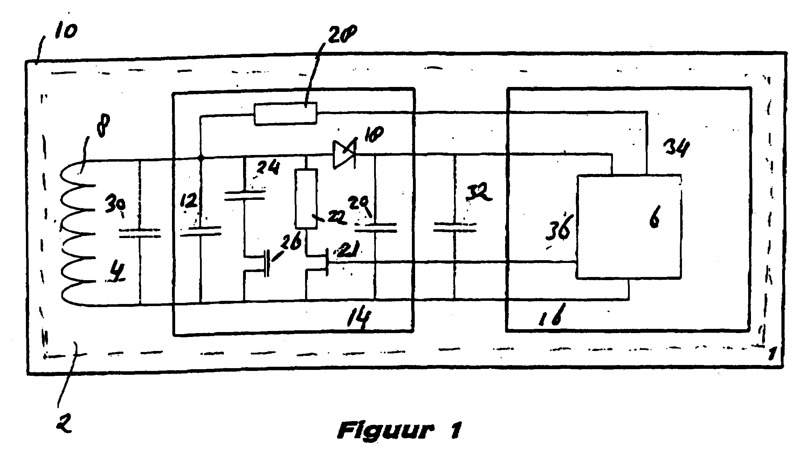

In Fig. 1, reference numeral 1 designates a possible embodiment of a contactless inductive identification label according to the invention. The label is adapted to responsively transmit the identification information when the label is introduced into an electromagnetic interrogation field.

The label comprises an electric circuit 2 which comprises a resonant circuit 4. The electric circuit 2 further comprises a logic circuit 6, connected with the resonant circuit 4. The logic circuit is a circuit for generating identification information in a manner known per se. The resonant circuit 4 comprises a coil 8. The coil 8 is made of a metal and is provided on a carrier 10 of the label 1. Further, the resonant circuit 4 comprises at least one capacity 12. The capacity 12 in this example forms part of a first electric circuit 14 which is constructed in silicon semiconductor electronics. Further, the electric circuit 2 comprises a second electric circuit 16, which is constructed in polymer semiconductor electronics. The coil 8 and the second electric circuit 16 are connected with each other via the first electric circuit 14. Because the first electric circuit 14 is designed in silicon semiconductor electronics, this means that the first electric circuit functions as an impedance converter between the resonant circuit 4 on the one hand and the second electric circuit on the other. In this example, the second electric circuit 16 comprises the logic circuit 6. The first electric circuit 14 comprises at least one rectifier diode 18 which is included between the resonant circuit 4 and the second electric circuit 16. When the resonant circuit is caused to resonate, the alternating voltage thus generated in the resonant circuit 4 is rectified by means of the diode 18 for obtaining a supply voltage which is fed to the second electric circuit 16. To that end, the first electric circuit 14 may further comprise a smoothing capacity 20. A further purpose of the rectifier diode 28 is to limit the losses in the voltage rectification for the purpose of the energy supply of the rest of the circuit.

The first electric circuit 14 further comprises a modulator 21 which, in this example, is connected in parallel with the resonant circuit via a series resistor 22. The first electric circuit 14 in this example further comprises a deactivation device which is formed by a series-connected capacity 24 and a FET switch 26. The thus formed deactivation device 24, 26 is again connected in parallel with the resonant circuit 4. For the purpose of the deactivation of the label for antitheft applications, with the aid of the deactivation device 24, 26 a shift of the resonant frequency of the resonant circuit 4 can be realized. To that end, the FET switch 26 comprises a so-called floating gate where, in a known manner, charge can be injected or removed to achieve an active, or passive, condition of the label, as described in European patent application no. 97201455.9. When the FET switch 26 is set in the conductive state, the capacity 24 is connected in parallel with the capacity 12 and/or the capacity 30, which entails a shift of the resonant frequency.

Further, the first electric circuit 14 comprises a frequency divider 28, which connects the resonant circuit 4 with the second electric circuit 16. In this example the capacity 12 of the resonant circuit 4 is included in the first electric circuit 14. It is also possible, however, that, instead, a capacity 30 is provided directly on the carrier 10, outside the first electric circuit 14 (the silicon chip) and outside the second electric circuit. It is also possible that the resonant circuit 4 comprises two capacities, the first capacity 12 forming part of the first electric circuit 14 and the second capacity 30 being provided on the carrier 10. Similarly, the smoothing capacity 20 can be wholly or partly replaced with a smoothing capacity 32 (indicated in dots) which is provided on the carrier 10 outside the first and second electric circuit 14, 16. The coil 8, capacity 30 and the capacity 32 can be provided, for instance, in the form of a laminate consisting of the plastic foil provided on opposite sides with an aluminum or copper foil.

The second electric circuit 16, which is a polymer semiconductor circuit connected with the silicon chip 14, consists of the logic circuit 6 known per se. In this example, the logic circuit 6 is fed with a synchronous clock signal 34 which, by means of the frequency divider 28, is derived directly from the frequency at which the resonant circuit 4 resonates in use. Depending on the data recorded in the logic circuit 6, for instance by means of memory elements or by means of so-called fusible links, identification information is fed to the modulator 21 via an output 36 of the logic circuit 6. The modulator 21 provides that the resonant circuit 4 is thus modulated with the identification information. Because the polymer semiconductor circuit 6 is less suitable for high switching frequencies, the frequency divider 28 is used in the case where this circuit is clocked with a clock signal that is synchronous with the phase of the resonant circuit 4. It is also possible, however, that the second electric circuit comprises a local oscillator for generating an asynchronous clock signal on which the second electric circuit operates. The frequency of this asynchronous clock signal will then generally be significantly lower than the resonant frequency of the resonant circuit 4.

Because, according to the invention, the second electric circuit is designed in polymer semiconductor electronics, it has a relatively high impedance. This means that if the coil 8 were connected directly to the second electric circuit 16, or if both the first and the second electric circuit were designed in polymer semiconductor electronics, the higher impedance would draw relatively much energy from the resonant circuit 4. However, because presently between the coil 8 and the second electric circuit a first electric circuit is included which is made on the basis of silicon semiconductor electronics, this has as a consequence, owing to the silicon material, that the first electric circuit functions as an impedance converter between the resonant circuit on the one hand and the second electric circuit 16 on the other. The resonant circuit presently "sees" the second electric circuit with a lowered impedance.

It will be clear that preferably as much as possible of the electric circuit 2 is realized with the aid of the second electric circuit 16 because it can be manufactured relatively inexpensively. If a deep modulation is desired, the modulator 21 is preferably designed in silicon semiconductor electronics and hence included in the first electric circuit 14 (the silicon chip). However, if a less deep modulation is desired, the modulator 21 can be included in the second electric circuit 16. It is also conceivable that not the first electric circuit but the second electric circuit 16 is optionally provided with a deactivation device. What is thereby achieved is that the first electric circuit can be made as small as possible. At particular relatively low resonant frequencies of a resonant circuit 4, the frequency divider 28 can actually be omitted then. The reason is that when the resonant frequency is not too high, a clock signal which is derived directly from the resonant frequency can be fed directly to the second electric circuit despite the second electric circuit 16 having a relatively high impedance. This does not alter the fact that the coil 8 is connected, via the first electric circuit 14 based on silicon semiconductor electronics, with the second electric circuit based on polymer semiconductor electronics. Such variants are all understood to fall within the framework of the invention.

**Claims**

1. A contactless inductive identification label responsively transmitting identification information when the identification label is introduced into an electromagnetic interrogation field, comprising an electric circuit comprising a resonant circuit and a logic circuit connected with the resonant circuit, the logic circuit being adapted for generating the identification information, and the resonant circuit comprising a coil, the resonant circuit being adapted to resonate when the identification label is introduced into the interrogation field, and the logic circuit being adapted to feed the identification information to the resonant circuit for modulating the resonant circuit with the identification information, characterized in that the electric circuit comprises a first electric circuit which is designed in silicon semiconductor electronics and a second electric circuit which is designed in polymer semiconductor electronics, the coil and the second electric circuit being connected with each other via the first electric circuit, so that the first electric circuit functions as an impedance converter between the resonant circuit and the second electric circuit.

2. A label according to claim 1, characterized in that the coil is made of a metal.

3. A label according to claim 1 or 2, characterized in that the second electric circuit comprises the logic circuit.

4. A label according to claim 1, 2 or 3, characterized in that the first electric circuit comprises at least one rectifier diode which is included between the resonant circuit and the second electric circuit.

5. A label according to claim 4, characterized in that the electric circuit further comprises at least one smoothing capacity for smoothing the direct voltage obtained by means of the rectifier diode, which is fed to the second electric circuit.

6. A label according to claim 5, characterized in that the at least one smoothing capacity is a part of the first electric circuit.

7. A label according to claim 5 or 6, characterized in that the at least one smoothing capacity is provided on a carrier of the label outside the first and the second electric circuit.

8. A label according to any one of the preceding claims, characterized in that the coil of the resonant circuit is provided on a carrier of the label.

9. A label according to claim 8, characterized in that the resonant circuit includes at least one capacity.

10. A label according to claim 9, characterized in that the at least one capacity of the resonant circuit is a part of the first electric circuit.

11. A label according to claim 9 or 10, characterized in that the at least one capacity is provided on a carrier of the label outside the first and the second electric circuit.

12. A label according to any one of the preceding claims, characterized in that the first electric circuit includes modulation means for modulating the resonant circuit with the identification information.

13. A label according to any one of the preceding claims 1-10, characterized in that the second electric circuit includes modulation means for modulating the resonant circuit with the identification information.

14. A label according to any one of the preceding claims, characterized in that the first electric circuit further comprises a frequency divider which is connected between the resonant circuit and the second electric circuit for feeding a clock signal, obtained by means of the resonant circuit, to the second electric circuit, the clock signal having a frequency lower than a resonant frequency of the resonant circuit.

15. A label according to any one of the preceding claims 1-13, characterized in that the second electric circuit comprises an oscillator for generating a clock signal for the logic circuit.

16. A label according to any one of the preceding claims, characterized in that the first electric circuit comprises a deactivation circuit for deactivating the electric circuit.

17. A label according to claim 16, characterized in that the deactivation circuit includes a FET and a deactivation capacity which are connected in series.

18. A label according to claim 17, characterized in that the deactivation circuit is connected in parallel with the resonant circuit.

19. A label according to any one of the preceding claims, characterized in that the logic circuit includes memory means or fusible links for storing the identification information.

Figuur 1

EP 1 056 040 A1

European Patent
Office

**EUROPEAN SEARCH REPORT**

Application Number

EP 00 20 1875

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 847 931 A (GAUMET MICHEL ET AL) 8 December 1998 (1998-12-08) * column 2, line 31 - line 55 * | 1 | G06K19/07 G06K19/077 |
| A | BROWN A R ET AL: "LOGIC GATES MADE FROM POLYMER TRANSISTORS AND THEIR USE IN RING OSCILLATORS" SCIENCE,US,AMERICAN ASSOCIATION FOR THE ADVANCEMENT OF SCIENCE,, vol. 270, page 972-974 XP000644682 ISSN: 0036-8075 * the whole document * | 1 | |
| A | PATENT ABSTRACTS OF JAPAN vol. 017, no. 581 (P-1631), 21 October 1993 (1993-10-21) & JP 05 166019 A (RICOH CO LTD), 2 July 1993 (1993-07-02) * abstract * | 1 | |
| A | EP 0 520 682 A (AMERICAN TELEPHONE & TELEGRAPH) 30 December 1992 (1992-12-30) * abstract * | 1 | TECHNICAL FIELDS SEARCHED (Int.Cl.7) G06K |
| A | "FOCUS ON POLYMER TRANSISTORS" ELECTRONICS WORLD AND WIRELESS WORLD,GB,REED BUSINESS PUBLISHING, SUTTON, SURREY, vol. 101, no. 1710, 1 May 1995 (1995-05-01), page 364 XP000508649 ISSN: 0959-8332 * the whole document * | 1 | |
| D,A | EP 0 807 912 A (NEDAP NV) 19 November 1997 (1997-11-19) * the whole document * | 17,18 | |

The present search report has been drawn up for all claims

| Place of search | Date of completion of the search | Examiner |
|---|---|---|
| THE HAGUE | 28 August 2000 | Goossens, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 20 1875

This annex lists the patent family members relating to the patent documents cited in the above–mentioned European search report.
The members are as contained in the European Patent Office EDP file on
The European Patent Office is in no way liable for these particulars which are merely given for the purpose of information.

28-08-2000

| Patent document cited in search report | | Publication date | Patent family member(s) | | Publication date |
|---|---|---|---|---|---|
| US 5847931 | A | 08-12-1998 | FR | 2747812 A | 24-10-1997 |
| | | | EP | 0803839 A | 29-10-1997 |
| | | | JP | 10044660 A | 17-02-1998 |
| JP 05166019 | A | 02-07-1993 | NONE | | |
| EP 0520682 | A | 30-12-1992 | US | 5272596 A | 21-12-1993 |
| | | | DE | 69219017 D | 22-05-1997 |
| | | | DE | 69219017 T | 31-07-1997 |
| | | | JP | 2633441 B | 23-07-1997 |
| | | | JP | 7040692 A | 10-02-1995 |
| | | | KR | 9606928 B | 25-05-1996 |
| EP 0807912 | A | 19-11-1997 | NL | 1003100 C | 18-11-1997 |

For more details about this annex : see Official Journal of the European Patent Office, No. 12/82